# EUROPÄISCHE PATENTSCHRIFT

(11) **EP 1 813 360 B1**
(45) Veröffentlichungstag und Bekanntmachung des Hinweises auf die Patenterteilung: **27.05.2020**
(21) Anmeldenummer: 07001793.4
(22) Anmeldetag: 26.01.2007
(51) Int. Cl.: B29K 95/00, B29L 31/10, B09B 3/00, C08L 95/00, B03B 9/06, B29B 17/02, C10C 3/00, E01C 19/10

(54) **Verfahren und Recyclinganlage zur Verwertung bitumenhaltiger Materialien und hergestelltes Bitumenmaterial**
Method and installation for the recycling of materials containing bitumen and manufactured bitumen material
Procédé et installation de recyclage de matériaux contenant du bitume et matériaux bitumineux produits

(30) Priorität: 27.01.2006 DE 102006004148
(43) Veröffentlichungstag der Anmeldung: 01.08.2007
(73) Patentinhaber: RCO Recycling-Centrum GmbH, 07639 Bad Klosterlausnitz (DE)
(72) Erfinder: Utermark, Holger, 07607 Eisenberg (DE)
(74) Vertreter: Drechsler, Gottfried

(56) Entgegenhaltungen:
- EP-A1- 0 899 307
- WO-A1-00/43184
- DE-A1- 4 406 161
- DE-C1- 19 612 971

## Beschreibung

Die Erfindung betrifft ein Verfahren und eine Recyclinganlage zur Verwertung von bitumenhaltigen Materialien aus der Dachmaterialherstellung und/oder bitumengebundenen Altdachmaterialien und die Herstellung eines wiederverwendbaren neuartigen Bitumenmaterials für den Wiedereinsatz vor allem in der Asphaltindustrie.

Verfahren zur Verwertung von Altbitumen aus Asphaltrückständen oder aus wiederaufbereiteten Altstraßenmaterialien und die Herstellung von Bitumenmaterialien sind in vielfältiger Zahl bekannt. Des Weiteren sind auch eine Vielzahl von technischen Lösungen beschrieben, bei denen bituminöses Dachmaterial einer Wiederverwendung zugeführt wird. Dachbaustoffe, insbesondere Dachbahnen, das heißt sogenannte "Dachpappen", bestehen in der Regel aus 10 bis 15 Gewichtsprozenten Trägermaterial, wie z.B. Kunststoffvlies oder Metallfolien, etwa 70 bis 60 Gewichtsprozenten Bitumen und im übrigen im wesentlichen aus Split. Das in bituminösen Dachbaustoffen verwendete Bitumen ist in der Regel höherwertig als das Bitumen, das normalerweise als Bindemittel beim Herstellen von Asphalt oder dergleichen eingesetzt wird. Der Qualitätsunterschied ist durch die - vor allem thermisch - höheren Anforderungen begründet. Das Bitumen von Dachbahnen ist nämlich wegen seiner geringen Schichtdicke viel größeren Temperaturschwankungen ausgesetzt, als die mehrere cm dicken Asphaltschichten im Straßenbau. Bei der Produktion bituminöser Dachbaustoffe, sowie daraus hergestellter Erzeugnisse, kommt es im Rahmen von Qualitätssicherungsmaßnahmen immer wieder zur Aussonderung von Fehlchargen bzw. Produktionsabfallmengen. Ebenfalls fallen beim Rückbau von Dächern im Rahmen von Dachsanierungen bzw. Abbrüchen, insbesondere bei älteren Industriegebäuden erhebliche Mengen bituminöser Dachbaustoffe an. Die Entsorgung dieser Abfälle ist, z.B. deren Verbrennung, ist sehr aufwendig und vor allem umweltschädlich.

Bei der Herstellung bituminöser Straßenbaustoffe wird ein Mineralgranulat, das heißt granuliert aufbereitetes Mineralmaterial, auf eine hohe Temperatur, z.B. in der Größenordnung von 160 bis 180°C, erhitzt und zur Mischung mit Bitumen - im sogenannten Asphaltmischer - bereitgehalten. Bereits bei Temperaturen bis 200°C wird Bitumen dünnflüssig.

Aus der DE 197 36 748 C1 ist ein Verfahren zum Herstellen von Straßenasphalt aus einem Mineralgranulat, dem Bitumen beigemischt wird, bekannt. Dabei erfolgt eine vollständige stoffliche Wiederverwendung bituminöser Dachbaustoffe aus einer Fehlproduktion oder Rückbau. Eine "stoffliche" Wiederverwendung liegt beispielsweise dann vor, wenn die Bestandteile des jeweiligen Stoffs oder Gegenstands als solche, das heißt ohne chemische Umarbeitung, wieder verwendet werden. Hierbei werden die Dachbaustoffe einem Mineralgranulat im Produktionsgang bituminöser Straßenbaustoffe, wie Asphalt, zugegeben. Der Bitumenträger, das heißt der jeweilige Dachbaustoff wird mit allen seinen Beimischungen geshreddert und dem Mineralgranulat mit allen seinen Bestandteilen beigemischt und damit vollständig wieder verwertet. Shreddern bedeutet hier eine Zerkleinerung, bevorzugt auf eine Stückgröße unter etwa 3 cm Durchmesser. Die Zusammenführung von Mineralgranulat und Bitumenträger erfolgt wie herkömmlich bei der Asphaltherstellung, das heißt der jeweilige bituminöse Dachbaustoff wird, z.B. in einem Asphaltmischer mit vorher erhitztem Mineralgranulat innig vermischt, wobei das heiße Mineralgranulat das Bitumen zum Schmelzen bringt und sich dadurch selbst verklebt bzw. bindet. Nachteilig bei dieser Lösung ist, dass keine gleichmäßige Materialzusammensetzung über längere Streckenabschnitte garantiert werden kann, da z.B. in Abhängigkeit von dem jeweils geshredderten Ausgangsmaterial Trägersubtanzen wie Polyestervlies, Glasvlies- , Polyestergewebe, Glasgewebe oder auch Metallbandteile in den Straßenbelag eingemischt enthalten sein können. Dieses Verfahren ist deshalb nur für geringfügige Zugaben zum Straßenbelag geeignet. Weiterhin neigt solcherart geshreddertes Material bei seinem Transport zu einer Asphaltmischanlage vor Ort dazu, auf Grund seiner vergrößerten Oberfläche und der klebenden Eigenschaften des Bitumenmaterials wieder zu verklumpen oder zu verkleben, was den Einsatz bei längeren Transportwegen unmöglich machen kann.

Um nicht für kleinere Schäden an mit Bitumen belegten Oberflächen immer mit heiß flüssigen Bitumen arbeiten zu müssen, was sehr aufwendig und teuer ist, ist es bekannt, Bitumengranulat herzustellen. Die Herstellung eines solchen Bitumengranulats aus reinem Bitumenausgangsstoff für spezielle Einsatzfälle ist zum Beispiel in der DE 39 42 215 A1 beschrieben. Dabei wird in einem Sprühmischer ein heißes flüssiges Bitumen verdüst und gleichzeitig über einen Kaltluftstrom ein Umpuderungs- und Trennmittel mit eingetragen.

Das Umpuderungs- und Trennmittel soll dabei während des Erkaltungsprozesses die sich bildenden Bitumentröpfchen umhüllen und ein Verkleben, z.B. während einer längeren Lagerzeit oder während des Transportes, zuverlässig verhindern. Als Umpuderungs- und Trennmittel wird in dieser technischen Lösung eine spezielle Kieselsäure oder ein Russstoff eingesetzt. Allerdings ist dieses Bitumengranulat weniger für weichere Straßenbaubitumen geeignet. In der Regel ist es zudem erforderlich, dass im Sprühmischer erzeugte Granulat einer weiteren Nachbehandlung in einem Trommelmischer zu unterziehen um eine vollständige Benetzung der Oberfläche zu erreichen. Dieses Verfahren funktioniert allerdings nur mit Frischbitumen und nicht mit aus anderen Stoffen gewonnenem Recyclingbitumen. Zudem ist dieses Bitumengranulat in regelmäßigen Zeitabständen zu belüften um ein Verbacken der einzelnen Partikel zu verhindern. Längere Lagerzeiten solcherart granulierten Bitumenmaterials sind deshalb kostenintensiv.

Aus der DE 38 17 064 ist es auch bekannt Bitumenpulver bzw. Bitumengranulat herzustellen, wobei flüssiges Bitumen durch Inkontaktbringen mit kryogenem Flüssiggas abgeschreckt und dabei granuliert oder pulverisiert wird. Nachteilig bei dieser Lösung ist, dass dieses mit Kälteschock erzeugte Granulat in gesonderten Kühlbehältern bei relativ niedrigen Temperaturen gelagert und zum Einsatzort gebracht werden muss, damit es nicht wieder verklumpt. Auch hier ist als Ausgangstoff für das erzeugte Bitumengranulat nur reines neues Frischbitumen geeignet.

Es sind des Weiteren auch schüttfähige Bitumenmischungen bekannt, die eine Vielzahl unterschiedlicher weiterer zugemischter Materialien enthalten. Als Beispiel hierfür sei die in der DE 37 36 215 aufgezeigte technische Lösung genannt. Hier sind in der Bitumenmischung neben dem obligatorischen Kieselsäureanteil auch noch zusätzlich Kunststoffe und gegebenenfalls faserförmige Materialien, Mineralöle oder Zeolithe enthalten. Als Ausgangstoff dient hier allerdings wiederum reines neu hergestelltes qualitativ hochwertiges und damit teures Frischbitumen.

Aus der DE 43 18 447 C2 ist ein Recyclingverfahren für heißschmelzende organische Stoffe bekannt, welche eine Trägereinlage, einen Füllstoffzusatz oder eine Bestreuung oder Abdeckung aufweisen können (wie insbesondere bituminöse Dachpappe oder Dichtungsbahnen). Dabei werden die wieder zu verwertenden Materialien zunächst zerkleinert. Beschrieben ist hier die Zerkleinerung bei einer Temperatur, bei welcher wesentliche Anteile heiß schmelzender Komponenten wieder pumpbar werden und in eine flüssige artgleiche oder artverwandte Masse gegeben werden können. Ziel ist es hierbei eine Rückgewinnung des Bitumens zu erreichen und eine flüssige Bitumenmasse einer wie auch immer gearteten Wiederverwendung zuzuführen. Das Problem der Lagerung und des Transports solcherart Recyclingbitumens bleibt hierbei offen. In dieser technischen Lösung werden relativ enge Grenzen von den tatsächlichen gewählten Prozesstemperaturen von 180 bis 190°C beschrieben. Dieses Verfahren definiert die allgemein vorherrschende Meinung Bitumenmaterialen bis zu einer Temperaturgrenze von ca. 180°C zu erhitzen und einer Wiederverwendung zuzuführen.

Aus der WO 00/43184 A1 ist ein Verfahren und eine Vorrichtung zur Rückgewinnung von bituminösen Materialien, insbesondere von bituminösen Dachabdeckungsmaterialien bekannt, wo ein auf 200 °C erwärmtes und zu verarbeitendes Material in einem Behälter zusammengepresst oder zusammengedrückt wird. Aufgabe ist es hierbei eine bestimmte Menge Bitumen rückzugewinnen.

In der DE 196 12 971 C1 ist ein Verfahren und eine Anlage zur Aufbereitung von armierten Bitumenbahnen-Abfällen beschrieben, wo ein Aufschmelzen mit einem Mahlschritt in einem kontinuierlich ablaufenden Prozess kombiniert wird. Dabei wird das zu verarbeitende Material bei maximal 200 °C aufgeschmolzen, in einer beheizten Trennvorrichtung von Armierungen und Einlagen befreit und anschließend einem Heißmahlschritt zugeführt. Die mögliche Ausbeute bei diesem Verfahren ist allerdings relativ gering.

Die EP 0 899 307 A1 beschreibt ein Verfahren zur Entsorgung bituminöser Dachbaustoffe, wo der gesamte Dachbaustoff mittels Erwärmung bis 200 °C einer Wiederverwendung zugeführt werden soll. Allerdings lässt sich mit diesem Verfahren kein qualitativ hochwertiger den heutigen Qualitätsansprüchen entsprechender Straßenbaustoff herstellen, da alle Inhaltsstoffe des Dachmaterials mit verwertet werden sollen.

In der DE 44 06 161 A1 wird des Weiteren ein Verfahren zur Wiederverwertung von bitumen oder teerhaltigen Verbundwerkstoffen aufgezeigt, wo insbesondere Dachpappe zunächst in einem ersten Schritt aufwändig abgekühlt, dann anschließend in der Unterkühlungsphase bei bis zu Minus 10°C auf ca. 1mm Korngröße mechanisch zerkleinert wird, dann die zerkleinerten Teile wieder aufgewärmt und anschließend vermischt werden sollen. Dann wird das erwärmte Gemisch zu Formteilen geformt, und gegebenenfalls gepresst und anschließend erneut auf Umgebungstemperatur im letzten Verfahrenschritt abgekühlt. Dieses Verfahren ist energetisch sehr aufwändig und in der beschriebenen Art und Weise nur schwer ausführbar. Eine Verarbeitung der Formteile als Straßenbaustoff ist nicht beschrieben.

Aufgabe der Erfindung ist es, ein einfaches und kostengünstiges Verfahren, eine neuartige Recyclinganlage sowie ein neuartiges Bitumenmaterial zu schaffen, bei dem wiederverwendbare Materialien aus der Dachherstellung oder aus Altdachabbrüchen teilweise einer stofflichen Wiederverwendung in Asphaltmischwerken zugeführt werden und dabei ein Bitumenmaterial erzeugt werden soll, dass problemlos auch lange lagerfähig bleibt, das sich gut über weite Strecken transportieren lässt, einfach vor Ort dosierbar ist und als kostengünstiges Substitut reinem Frischbitumen zugegeben und als Mischung eingesetzt werden kann ohne dass der damit hergestellte Straßenbelag schlechtere Qualitäts- und Lebensdauereigenschaften aufweist.

Die Lösung dieser Aufgabe ist Gegenstand der in den selbständigen Ansprüchen offenbarten Erfindung. Weitere zweckmäßige Ausgestaltungen der Erfindung sind Gegenstand der Unteransprüche. Das erfindungsgemäßem Verfahren zur Verwertung von bitumenhaltigen Materialien aus der Dachmaterialherstellung und/oder bitumengebundenen Altdachmaterialien beruht ebenfalls, wie an sich bekannt, auf einer Erwärmung der Dachmaterialien. Als erstes wird das zu verarbeitende Dachmaterial in kaltem Zustand in konventionellen Zerkleinerungsanlagen auf eine Körnung von ca. 20 - 300mm zerkleinert. Anschließend wird das Dachmaterial in einem Schmelzbehälter auf eine Temperatur von bis zu 220°C übertemperiert. Während der Erwärmung wird im Schmelzgutbehälter von außen eine Mischgutbewegung zwangsweise induziert. Dadurch wird eine gleichmäßigere und vor allem schnelle Erwärmung des gesamten zu schmelzenden Dachmaterials erzielt. Nach dem Schmelzen ist es möglich im Inneren des Schmelzbehälters ein Pressen des Mischgutes durchzuführen. Dabei werden die groben Bestandteile des Mischgutes im Schmelzbehälter so weit nach oben verfahren, z.B. durch Verfahren einer mit Löchern oder Öffnungen siebartig versehenen Metallplatte, bis sich dieses grobe Mischgut oberhalb des Füllstandes der flüssigen Bitumenmasse im Schmelzbehälter befindet. Durch dieses Pressen des Mischgutes wird der Materialaustrag aus dem zerkleinerten erwärmten Material erhöht und das ausgepresste Bitumen tropft nach unten in den Schmelzbehälter. Dies kann erfolgen indem die siebartige Platte gegen ein festes oder auch bewegliches Hindernis im Schmelzbehälter, wie beispielsweise den Deckel des Schmelzbehälters, verfahren wird und gegenüber dem Hindernis ein entsprechender Pressdruck erzeugt wird. Die gepressten Rückstände werden aus dem Schmelzbehälter nach oben bewegt und mittels einer geeigneten Vorrichtung entfernt.

Überraschenderweise wurde gefunden, dass eine Übertemperierung des Bitumenmaterials während der Zeitdauer des Schmelzprozesses nicht zu den der Fachwelt bekannten Qualitätsverlusten führt. Normalerweise wird davon ausgegangen, dass bereits bei Temperaturen von oberhalb 200°C eine Entpolymerisation der Bindungen in der Bitumenmasse erfolgt. Allerdings ist diese Entpolymerisation der chemischen Bindungen stark zeitabhängig. Eine kurzzeitige Übertemperierung während des Schmelzprozesses führt noch nicht dazu, dass die Eigenschaften des Recyclingbitumens sich so verändern, dass ein Einsatz im Straßenbau damit nicht möglich wäre.

Das ausgeschmolzene und/oder ausgepresste Bitumenmaterial wird anschließend durch einem Filter mit einer Lochgröße 120 µm gepumpt und dabei filtriert. Diesem filtrierten Bitumenmaterial wird ein Anteil Frischbitumen zugesetzt. Dieser Anteil bewegt sich je nach den Eigenschaften des Recyclingbitumens zwischen 25 bis 35 Prozent. Es ist auch vorteilhaft, wenn in dieser Schlussphase in das Bitumenmaterial noch geeignete Additive eingemischt werden. Anschließend wird dieses Bitumenmaterial in üblicher bekannter Weise mittels einer Bandanlage gekühlt und gebrochen. Unmittelbar danach wird dieses gekühlte und gebrochene Bitumenmaterial mittels eines Trennmittels umhüllt und granuliert.

Es ist ebenfalls möglich bei Bedarf das Recyclingbitumen einer Blockgießanlage zuzuführen und daraus leicht transportierbare und verarbeitbare Bitumenblöcke zu gießen.

In einer bevorzugten Ausbildung des Verfahrens wird im Schmelzbehälter eine Materialvorlage von einem Drittel Frischbitumen bei ca. 180°C vorgehalten und es werden dann ca. zwei Drittel gereinigtes und zerkleinertes Dachmaterial vor dem Schmelzprozess zugegeben.

Im Ergebnis des erfindungsgemäßen Verfahrens entsteht wahlweise ein spezielles Bitumenmaterial als Bitumengranulatmaterial oder als ein Bitumenblockmaterial. Als Bitumengranulat besteht das Bitumenmaterial aus 65 - 75% Altbitumen mit einer Partikelgröße kleiner, gleich 120 µm und 35 - 25% Frischbitumen. Auf das Bitumenmaterial bezogen sind zusätzlich bis zu 40% Prozent Schiefermehl und 3 - 10% Umhüllungsstoffe zugemischt, wobei das Bitumenmaterial dann eine Korngröße von 10-30 mm aufweist und einen Erweichungspunkt von 74-75 °C besitzt.

Als Bitumenblockmaterial besteht das Bitumenmaterial aus 65 - 75% Altbitumen mit einer Partikelgröße kleiner, gleich 120 µm und 35 - 25% Frischbitumen. Auf das Bitumenmaterial bezogen sind zusätzlich 20 - 40% Prozent Schiefermehl zugemischt, wobei das Bitumenmaterial dann einen Erweichungspunkt von 101 - 102°C besitzt. In dieser Art läst sich das recycelte Bitumenmaterial beliebig lange problemlos lagern und auch transportieren Dieser höhere Erweichungspunkt hat den Vorteil, dass bei der Zerkleinerung der Bitumenblöcke vor Ort kein Verkleben der entsprechenden Maschinen erfolgen kann.

Diese Bitumenmaterialien können auch Vorteilhafterweise zusätzlich mit Additiven vermischt sein. Es können bezogen auf den gesamten Bitumenanteil bis zu 20% Additive zugemischt sein.

In einer vorteilhaften Ausführung des erfindungsgemäßen Verfahrens wird dem neuartigen Bitumenmaterial als ein Additiv zusätzlich gemahlene Steinwolle in Fasergrößen bis 15 mm in einem Anteil von bis zu 20 Gewichtsprozenten zugegeben.

Es ist auch möglich im Verfahren als Additiv Papierfasern in Fasergrößen bis 15 mm in einem Bereich von bis zu 20 Gewichtsprozenten zuzugeben.

In einer anderen Ausbildung des Verfahrens können auch als Additiv gemahlene Mineralfasern in Fasergrößen bis 15 mm in einem Bereich von bis zu 20 Gewichtsprozenten eingesetzt werden.

Vorteilhaft ist es ebenfalls, wenn als Additiv Fasern auf der Basis von synthetischen Polymeren in Fasergrößen bis 25 mm in einem Bereich von bis zu 20 Gewichtsprozenten eingesetzt werden.

Die im Verfahren erforderliche und von außen induzierte Mischgutbewegung kann wahlweise wie üblich mittels eines Rührwerks oder mittels dem Schmelzbehälter entnommenem und wieder unter Druck einströmenden heißen Bitumenmaterial erzeugt werden. Es ist auch eine Kombination von Rührwerk und einströmenden Bitumenmaterial möglich, so dass die Erwärmung des Mischgutes schneller als bislang üblich erfolgen kann. Dadurch wird die Zeit, in der das Bitumenmaterial überhitzt wird, weiter verringert.

Die neuartige Recyclinganlage zur Durchführung des Verfahrens für zerkleinerte und/oder gesiebte und gereinigte Dachmaterialien 1 mit einer Körnung kleiner 30mm besteht aus einem heizbaren Schmelzbehälter 10 und einem temperierbaren Pufferbehälter 14, welche untereinander verbundenen sind. Am beheizbaren Schmelzbehälter 10 ist eine Einrichtung zur Erzeugung einer Mischgutbewegung 17 angeordnet. Im Inneren des heizbaren Schmelzbehälters 10 befindet sich des Weiteren eine verfahrbare Press- und Austragseinrichtung 18. Im Schmelzbehälter 10 ist eine definierte Menge vorgehaltenes Bitumenmaterial 2 bei 180 °C enthalten. Nach Zugabe des zerkleinerten Ausgangsmaterials, dem gesiebten und gereinigten Dachmaterial 1 erfolgt ein Aufschmelzen des Mischgutes bei Übertemperartur. Der Austrag der groben Bestanteile 3 erfolgt durch Herausheben aus der flüssigen Bitumenmasse mittels einer z.B. mit Bohrungen definierten Durchmessers versehenen massiven Metallplatte. Von oben wird eine andere massive Metallplatte abgesenkt und gegen die andere gedrückt und das Material somit ausgepresst. Das herausgepresste Bitumen fließt in den Schmelzbehälter 10 zurück. Das ausgepresste Abfallmaterial (Austrag grober Bestandteile 3) wird mittels einer entsprechend geeigneten Vorrichtung von der Metallplatte entfernt. Der Schmelzbehälter 10 ist über die Pumpen 11 und 13 mit dem temperierbaren Pufferbehälter 14 verbunden, wobei zwischen beiden ein Kantenspaltfilter 12 zwischengeschaltet ist. Am Kantenspannfilter 12 erfolgt erneut ein Austrag grober Restbestandteile 4. Im Inneren des temperierbaren Pufferbehälters 14 ist ein Rührwerk 19 angeordnet. Durch die Temperiereinrichtung kann die Temperatur im Pufferbehälter 14 auf konstantem Wert gesteuert und gehalten werden. In den temperierbaren Pufferbehälter 14 werden entsprechend dem erfindungsgemäßen Verfahren die erforderlichen Anteile Frischbitumen 5 und Schiefermehl 6 zugemischt. Hier erfolgen die Einstellung der Stoffzusammensetzung des Bitumenmaterials und die Einstellung des jeweils optimalen Erweichungspunktes in Abhängigkeit davon, ob Bitumengranulat oder Bitumenmaterial in Blockform hergestellt werden soll. Wahlweise ist die Austragsleitung des temperierbaren Pufferbehälters 14 auf ein Kühlband mit einer Brecheinrichtung 15 geführt, wo das Bitumenmaterial gekühlt und an der Ablenkkante der Kühlbandanlage 15 als Bitumengranulat mit einer Brecheinrichtung gebrochen wird. Im nachgeschalteten Trennmittelbehälter 16 erfolgt die Umhüllung des Bitumengranulats mit einem Trennmittel 8, wie insbesondere Kieselsäure. Die neuartige Recyclinganlage zur Durchführung des Verfahrens ermöglicht ebenfalls über die Austragsleitung des temperierbaren Pufferbehälters 14 bei anderer stofflicher Zusammensetzung den Inhalt des temperierbaren Pufferbehälters 14 zu einer Blockgießeinrichtung 7 zu pumpen und Bitumenmaterial mit einem Erweichungspunkt von 101 - 102°C, d. h. in der Regel Bitumenblöcke oder Bitumenplatten zu fertigen.

Der Vorteil der Erfindung besteht darin, sowohl die in zunehmender Menge anfallenden Altdachmaterialien als auch die Produktionsrückstände aus der Herstellung und dem Einbau von neuen bitumenhaltigen Dachmaterialen einer ökologisch und ökonomisch sinnvollen Wiederverwertung zuzuführen. Mit dem erfindungsgemäßen Verfahren lassen sich erstmals sehr kostengünstiges Bitumengranulat oder bei Bedarf auch Bitumenblöcke als teilweisen Ersatz für teures Frischbitumen, sogenanntes Primärbitumen herstellen, die die gleichen Gebrauchs- und Qualitätseigenschaften wie Frischbitumen besitzen. Ein weiterer Vorteil der Darreichung der Einsatzstoffe als Granulat besteht darin, dass die Asphaltmischwerke über eine Dosierung von Schüttgütern in den Mischer verfügen und deshalb keine weiteren apparativen Anlagen vorgehalten werden müssen. Außerdem wird der problematische Transport von flüssigem Recyclingbitumen umgangen, welcher darin besteht, dass während des Transportes von flüssigem Recyclingbitumen eine Phasentrennung von Bitumen und Füller erfolgen kann, wodurch sich der mineralische Füller in den Transporttanks absetzt und sehr aufwändig wieder entfernt werden muss.

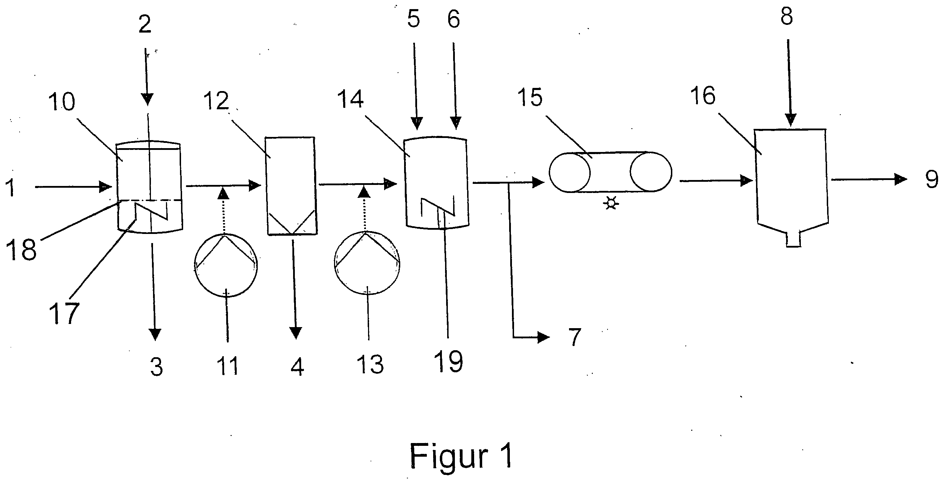

Die Erfindung soll nachstehend in einem Ausführungsbeispiel an Hand der Figur 1 näher erläutert werden. Die Figur 1 zeigt den Kern einer erfindungsgemäßen Recyclinganlage zur Durchführung des Verfahrens nach Anspruch 1 für zerkleinerte und/oder gesiebte und gereinigte Dachmaterialien 1 mit einer Körnung kleiner 30 mm. Sinnvoll ist eine zusätzliche Siebung, so dass der Schmelzbehälter 10 nur mit gesiebten und gereinigten Dachmaterial 1 bis maximal 20 mm Korngröße beschickt wird, was die erforderliche Zeit zum Aufschmelzen bei Übertemperatur im Schmelzbehälter 10 reduziert. Gleichzeitig steigt der Anteil des zurückgewonnen Bitumenmaterials aus dem Mischgut. Im beheizbaren Schmelzbehälter 10 ist als Einrichtung zur Erzeugung einer Mischgutbewegung 17 ein Rührwerk angeordnet. Zu einer vorgehaltenen Menge von Bitumenmaterial 2 bei 180 °C (bevorzugt wird Frischbitumen gewählt) werden die doppelte Menge gesiebtes und gereinigtes Dachmaterial 1 zugegeben. Anschließend erfolgt das gesteuerte Aufschmelzen bei ständigem Rühren bei Temperaturen bis zu 220°C entsprechend einer definierten maximalen Verweilzeit. Im Inneren des heizbaren Schmelzbehälters 10 befindet sich des Weiteren als verfahrbare Press- und Austragseinrichtung 18 eine massive verfahrbare Metallplatte, in die eine Vielzahl kleiner Bohrungen eingebracht sind. Nachdem das Mischgut im Schmelzbehälter 10 aufgeschmolzen wurde, erfolgt das Austragen verbliebener grober Bestandteile 3 mittels Verfahren der Metallplatte. Gegen die Metallplatte wird von oben her eine weitere massive Metallplatte gepresst, so dass das restliche Bitumenmaterial aus dem Mischgut gepresst wird. Das herausgepresste Bitumen fließt in den Schmelzbehälter 10 zurück. Das ausgepresste Abfallmaterial (Austrag grober Bestandteile 3) wird mittels einer entsprechend geeigneten Vorrichtung von der Metallplatte entfernt. Der Schmelzbehälter 10 ist mit dem temperierbaren Pufferbehälter 14 verbunden, wobei in die Verbindungsleitung zwischen beiden ein Kantenspaltfilter 12 über die Pumpen 11 und 13 zwischengeschaltet ist. Am Kantenspannfilter 12 erfolgt erneut ein Austrag grober noch vorhandener Restbestandteile 4. Der Kantenspaltfilter ist bevorzugt so eingestellt, dass alle Fraktionsbestandteile größer 120 µm ausgetragen werden. Dieses Filtrat wird dem temperierbaren Pufferbehälter 14 zugeführt. Im Inneren des temperierbaren Pufferbehälters 14 ist ein weiteres Rührwerk 19 angeordnet. Durch die Temperiereinrichtung kann die Temperatur im Pufferbehälter 14 auf konstantem Wert gesteuert und gehalten werden. In den temperierbaren Pufferbehälter 14 werden entsprechend dem erfindungsgemäßen Verfahren die erforderlichen Anteile Frischbitumen 5 und Schiefermehl 6 zugemischt. Hier erfolgen die Einstellung der Stoffzusammensetzung des Fertigbitumenmaterials und die Einstellung des jeweils optimalen Erweichungspunktes in Abhängigkeit davon, ob Bitumengranulat oder Bitumenmaterial in Blockform hergestellt werden soll. Wahlweise ist die Austragsleitung des temperierbaren Pufferbehälters 14 auf ein Kühlband mit einer Brecheinrichtung 15 geführt, wo das Bitumenmaterial gekühlt und an der Ablenkkante der Kühlbandanlage 15 als Bitumengranulat gebrochen wird. Soll Bitumengranulat 9 mit einem Erweichungspunkt von 74 - 75°C mit dem erfindungsgemäßen Verfahren hergestellt werden, erfolgt im Pufferbehälter eine Mischung von Recyclingbitumen zu Frischbitumen von 70 zu 30 Teilen. Der genaue Erweichungspunkt wird durch Zugabe von Schiefermehl bestimmter Partikelgröße und in Abhängigkeit von den jeweiligen Eigenschaften der gerade erschmolzenen Bitumenmischung feineingestellt. Im nachgeschalteten Trennmittelbehälter 16 erfolgt die Umhüllung des Bitumengranulats mit einem Trennmittel 8, wie insbesondere Kieselsäure, wie allgemein bekannt. Die neuartige Recyclinganlage zur Durchführung des Verfahrens ermöglicht ebenfalls über die Austragsleitung des temperierbaren Pufferbehälters 14 bei anderer stofflicher Zusammensetzung den Inhalt des temperierbaren Pufferbehälters 14 zu einer Blockgießeinrichtung 7 zu pumpen und Bitumenmaterial mit einem Erweichungspunkt von 101 - 102°C, d. h. in der Regel Bitumenblöcke oder Bitumenplatten zu fertigen. Dabei wird im temperierbaren Pufferbehälter 14 der erschmolzenen Bitumenmischung Schiefermehl bestimmter Partikelgröße in Mengen bis zu 40 Prozent zugegeben.

Das erfindungsgemäße Verfahren und die Recyclinganlage sind einsetzbar vor allem bei der Wiederverwendung bituminöser Dachbaustoffe aus einer Fehlproduktion oder dem Rückbau alter bitumengebundener Dachsubstanz. Das Recyclingbitumen ist in erster Linie für den Einsatz in Asphaltmischanlagen für den Straßenbau anwendbar.

### Liste der verwendeten Bezugszeichen

- 1: gesiebte und gereinigte Dachmaterialien
- 2: vorgehaltenes Bitumenmaterial bei 180°C
- 3: Austrag der groben Bestanteile
- 4: Austrag der groben Restbestanteile
- 5: Schiefermehl
- 6: Frischbitumen
- 7: Blockgießeinrichtung mit Zuführung von Bitumenmaterial mit einem Erweichungspunkt von 101 - 102°C
- 8: Trennmittel
- 9: Bitumengranulat mit einem Erweichungspunkt von 74 - 75°C
- 10: beheizbarer Schmelzbehälter
- 11: Pumpe
- 12: Kantenspaltfilter
- 13: Pumpe
- 14: temperierbarer Pufferbehälter
- 15: Kühlband mit Brecheinrichtung
- 16: Trennmittelbehälter
- 17: Einrichtung zur Erzeugung einer Mischgutbewegung
- 18: verfahrbare Press- und Austragseinrichtung
- 19: Rührwerk

## Patentansprüche

1. Verfahren zur Verwertung von bitumenhaltigen Materialien aus der Dachmaterialherstellung und/oder bitumengebundenen Altdachmaterialien, wobei ein Erwärmen und/oder Pressen der Dachmaterialien erfolgt
**dadurch gekennzeichnet,**
**dass** das Dachmaterial auf eine Körnung von 20-300 mm zerkleinert wird, das Dachmaterial während einer induzierten Mischgutbewegung in einem Schmelzbehälter auf eine Temperatur von bis zu 220°C übertemperiert wird,
das erwärmte Dachmaterial dann geschmolzen und/oder gepresst wird,
das ausgeschmolzene und/oder ausgepresste Bitumenmaterial mit einem Filter mit einer Lochgröße 120 µm filtriert wird,
zum Bitumenmaterial ein Anteil 25 - 35 % Frischbitumen zugesetzt wird,
das Bitumenmaterial in einer Bandanlage gekühlt und anschließend mittels eines Trennmittels umhüllt und granuliert wird,
oder das Bitumenmaterial in Blockform gegossen wird
und/oder in das Bitumenmaterial geeignete Additive eingemischt werden.

2. Verfahren nach Anspruch 1
**dadurch gekennzeichnet,**
**dass** im Schmelzbehälter eine Materialvorlage von einem Drittel Frischbitumen bei ca. 180°C vorgehalten wird und zwei Drittel gereinigtes und zerkleinertes Dachmaterial zugegeben werden.

3. Bitumenmaterial hergestellt nach dem Verfahren nach Anspruch 1,
**dadurch gekennzeichnet,**
**dass** das granulierte Bitumenmaterial aus 65 - 75% Altbitumen mit einer Partikelgröße kleiner, gleich 120 µm und 35 - 25% Frischbitumen besteht,
**dass** auf das Bitumenmaterial bezogen zusätzlich bis zu 40% Schiefermehl und 3 - 10% Umhüllungsstoffe zugemischt sind,
das Bitumenmaterial eine Korngröße von 10 - 30 mm aufweist
und einen Erweichungspunkt von 74 - 75 °C besitzt.

4. Bitumenmaterial hergestellt nach dem Verfahren nach Anspruch 1,
**dadurch gekennzeichnet,**
**dass** das in Blockform gegossene Bitumenmaterial aus 65 - 75% Altbitumen mit einer Partikelgröße kleiner, gleich 120 µm und 35 - 25% Frischbitumen besteht,
**dass** auf das Bitumenmaterial bezogen zusätzlich 20 - 40% Schiefermehl zugemischt sind und dass es einen Erweichungspunkt von 101 - 102°C besitzt

5. Bitumenmaterial nach Anspruch 3 oder 4,
**dadurch gekennzeichnet,**
**dass** das Bitumenmaterial bis zu 20% Additive bezogen auf den Bitumenanteil enthält.

6. Verfahren nach Anspruch 1 oder 2
**dadurch gekennzeichnet,**
**dass** als Additiv gemahlene Steinwollen in Fasergrößen bis 15 mm eingesetzt werden.

7. Verfahren nach Anspruch 1 oder 2
**dadurch gekennzeichnet,**
**dass** als Additiv Papierfasern in Fasergrößen bis 15 mm eingesetzt werden.

8. Verfahren nach Anspruch 1 oder 2
**dadurch gekennzeichnet,**
**dass** als Additiv gemahlene Mineralfasern in Fasergrößen bis 15 mm eingesetzt werden.

9. Verfahren nach Anspruch 1 oder 2
**dadurch gekennzeichnet,**
**dass** als Additiv Fasern auf der Basis von synthetischen Polymeren in Fasergrößen bis 25 mm eingesetzt werden.

10. Verfahren nach Anspruch 1
**dadurch gekennzeichnet,**
**dass** die induzierte Mischgutbewegung mittels eines Rührwerks erfolgt.

11. Verfahren nach Anspruch 1
**dadurch gekennzeichnet,**
**dass** die induzierte Mischgutbewegung mittels dem Schmelzbehälter entnommenen und wieder unter Druck einströmenden heißem Bitumenmaterial erzeugt wird.

12. Recyclinganlage zur Durchführung des Verfahrens nach Anspruch 1 für zerkleinerte und/oder gesiebte und gereinigte Dachmaterialien (1) mit einer Körnung kleiner 30 mm,
**dadurch gekennzeichnet,**
**dass** an einem heizbaren Schmelzbehälter (10) eine Einrichtung zur Erzeugung einer Mischgutbewegung (17) angeordnet ist,
im Inneren des heizbaren Schmelzbehälters (10) eine verfahrbare Press- und Austragseinrichtung (18) angeordnet ist,
mit dem Schmelzbehälter (10) über eine Pumpe (11) ein temperierbarer Pufferbehälter (14) verbunden ist,
wobei in die Verbindungsleitung zwischen beiden ein Kantenspaltfilter (12) zwischengeschaltet ist,
im temperierbaren Pufferbehälter (14) ein Rührwerk (19) angeordnet ist,
dessen Austragsleitung wahlweise auf ein Kühlband mit einer Brecheinrichtung (15) geführt ist, dem ein Trennmittelbehälter (16) nachgeschaltet ist,
oder die Austragsleitung des temperierbaren Pufferbehälters (14) zu einer Blockgießeinrichtung (7) geführt ist.

## Claims

1. A method for recycling bituminous materials from roofing material manufacture and/or from bitumen-bonded scrap roofing materials, wherein heating and/or pressing of the roofing materials is performed,
**characterized in that**
the roofing material is shredded to a particle size of 20-300 mm,
the roofing material is excessively tempered to a temperature of up to 220 °C in a melt vessel during an induced movement of the material to be mixed,
the heated roofing material is then melted and/or pressed,
the bitumen material that has melted out and/or been pressed out is filtered using a filter with a hole size of 120 µm,
fresh bitumen is added to the bitumen material in a proportion of 25-30 %,
the bitumen material is cooled in a belt conveyor system and subsequently coated with a separating agent and granulated,
or the bitumen material is cast into a block shape
and/or suitable additives are mixed into the bitumen material.

2. The method according to claim 1,
**characterized in that**
one third of a fresh bitumen material supply at about 180 °C is provided in the melt vessel and two thirds of purified and shredded roofing material is added.

3. A bitumen material manufactured using the method according to claim 1,
**characterized in that**
the granulated bitumen material consists of 65-75% scrap bitumen of a particle size less than or equal to 120 µm and 35-25% fresh bitumen,
in addition, up to 40% slate powder and 3-10% coating substances in relation to the bitumen material are admixed,
the bitumen material has a particle size of 10-30 mm
and has a softening point of 74-75 °C.

4. The bitumen material manufactured using the method according to claim 1,
**characterized in that**
the bitumen material cast into a block shape consists of 65-75% scrap bitumen of a particle size less than or equal to 120 µm and 35-25% fresh bitumen,
in addition, up to 20-40% slate powder in relation to the bitumen material is admixed and it has a softening point of 101-102 °C.

5. The bitumen material according to claim 3 or 4,
**characterized in that**
the bitumen material contains up to 20% of additives in relation to the proportion of bitumen.

6. The method according to claim 1 or 2,
**characterized in that**
ground rock mineral wools in fibre sizes up to 15 mm can be used as an additive.

7. The method according to claim 1 or 2,
**characterized in that**
paper fibres in fibre sizes up to 15 mm can be used as an additive.

8. The method according to claim 1 or 2,
**characterized in that**
ground mineral fibres in fibre sizes up to 15 mm can be used as an additive.

9. The method according to claim 1 or 2,
**characterized in that**
fibres on the basis of synthetic polymers in fibre sizes up to 25 mm can be used as an additive.

10. The method according to claim 1,
**characterized in that**
the induced movement of the material to be mixed is produced by a stirring unit.

11. The method according to claim 1,
**characterized in that**
the induced movement of the material to be mixed is produced by hot bitumen material removed from the melt vessel and flowing back into it under pressure.

12. A recycling plant for performing the method according to claim 1 for shredded and/or sieved and cleaned roofing materials (1) with a particle size of less than 30 mm,
**characterized in that**
an apparatus for producing a movement of the material to be mixed (17) is disposed at a heatable melt vessel (10),
inside the heatable melt vessel (10), a movable pressing and discharge unit (18) is disposed,
a temperature-controlled buffer vessel (14) is connected with the melting vessel (10) via a pump (11),
wherein an edge-gap filter (12) is interposed in the connection line between both,
a stirring unit (19) is disposed in the temperature-controlled buffer vessel (14),
whose discharge conduit is optionally guided to a cooling belt with a breaking apparatus (15) followed downstream by a separating agent vessel (16),
or the discharge conduit of the temperature-controlled buffer vessel (14) is guided to a block casting apparatus (7).

## Revendications

1. Procédé de recyclage de matériaux bitumineux provenant de la fabrication de matériaux de toiture et/ou de matériaux de toiture usagés liés par le bitume, dans lequel intervient un réchauffage et/ou un pressage des matériaux de toiture,
**caractérisé en ce que**
le matériau de toiture est broyé selon une granulométrie de 20 à 300 mm,
le matériau de toiture se trouve surchauffé à une température allant jusqu'à 220 °C dans un récipient de fusion et lors d'un mouvement induit de l'enrobé,
le matériau de toiture réchauffé est ensuite fondu et/ou pressé,
le matériau de bitume fondu et/ou pressé est filtré au travers d'un filtre dont la taille des orifices est de 120 µm,
une proportion de 25 à 35 % de bitume frais est ajoutée au matériau de bitume,
le matériau de bitume est refroidi dans une installation à bande avant d'être recouvert ensuite par un agent de décollage et granulé,
ou bien le matériau est coulé en blocs
et/ou des additifs appropriés sont mélangés au matériau de bitume.

2. Procédé selon la revendication 1,
**caractérisé en ce que**
un tiers de matériau de bitume frais est préalablement déposé dans le récipient de fusion à environ 180 °C et que deux tiers de matériau de toiture purifié et broyé y sont ajoutés.

3. Matériau de bitume produit par le procédé selon la revendication 1,
**caractérisé en ce que**
le matériau de bitume granulé est composé de 65 à 75 % de bitume usagé dont la taille des particules est inférieure ou égale à 120 µm et de 35 à 25 % de bitume frais, que, par rapport au matériau de bitume, jusqu'à 40 % de poudre de schiste et 3 à 10 % de substances d'enrobage y sont additionnellement mélangés,
le matériau de bitume présente une granulométrie de 10 à 30 mm
et a un point de ramollissement de 74 à 75 °C.

4. Matériau de bitume produit par le procédé selon la revendication 1,
**caractérisé en ce que**
le matériau de bitume coulé en blocs est composé de 65 à 75 % de bitume usagé dont la taille des particules est inférieure ou égale à 120 µm, et de 35 à 25 % de bitume frais,
et que, par rapport au matériau de bitume, 20 à 40 % de poudre de schiste y sont additionnellement mélangés et lequel matériau a un point de ramollissement de 101 à 102 °C.

5. Matériau de bitume selon la revendication 3 ou 4,
**caractérisé en ce que**
le matériau de bitume contient jusqu'à 20 % d'additifs par rapport à la proportion de bitume.

6. Procédé selon la revendication 1 ou 2,
**caractérisé en ce que**
des laines de roche broyées dont la taille de fibres va jusqu'à 15 mm sont utilisées comme additif.

7. Procédé selon la revendication 1 ou 2,
**caractérisé en ce que**
des fibres de papier dont la taille de fibres va jusqu'à 15 mm sont utilisées comme additif.

8. Procédé selon la revendication 1 ou 2,
**caractérisé en ce que**
des fibres minérales broyées dont la taille de fibres va jusqu'à 15 mm sont utilisées comme additif.

9. Procédé selon la revendication 1 ou 2,
**caractérisé en ce que**
des fibres à base de polymères synthétiques dont la taille de fibres va jusqu'à 25 mm sont utilisées comme additif.

10. Procédé selon la revendication 1,
**caractérisé en ce que**
le mouvement induit de l'enrobé est produit par un agitateur.

11. Procédé selon la revendication 1,
**caractérisé en ce que**
le mouvement induit de l'enrobé est produit par du matériau de bitume chaud enlevé au récipient et réintroduit sous pression.

12. Installation de recyclage pour la mise en œuvre du procédé selon la revendication 1 pour des matériaux de toiture (1) broyés et/ou tamisés et purifiés selon une granulométrie inférieure à 30 mm,
**caractérisé en ce que**
un dispositif pour produire un mouvement de l'enrobé (17) est appliqué à un récipient de fusion (10) chauffable,
un dispositif de pressage et d'extraction (18) déplaçable est disposé à l'intérieur du récipient de fusion (10) chauffable,
un réservoir tampon (14) dont la température est réglable est relié au récipient de fusion (10) par une pompe (11),
un filtre à arêtes à discontinuité (12) étant interposé dans le conduit de liaison entre les deux,
un agitateur (19) étant disposé dans le réservoir tampon (14)
dont le conduit d'extraction est optionnellement guidé sur une bande de refroidissement à un dispositif rupteur (15) suivi d'un récipient d'un agent de décollage (16),
ou bien le conduit d'extraction du réservoir tampon (14) étant guidé à un dispositif de coulage (7) pour la fabrication de blocs.
